# EUROPEAN PATENT APPLICATION

(11) **EP 4 755 660 A1**
(43) Date of publication of application: **10.06.2026**
(21) Application number: 25196601.6
(22) Date of filing: 19.08.2025
(51) Int. Cl.: B60C 13/00

(54) **PROTRUDING KNURLING UNIT AND TIRE INCLUDING THE SAME**

(30) Priority: 06.12.2024 KR 20240180958
(71) Applicant: Kumho Tire Co., Inc., Gwangju 62392 (KR)
(72) Inventor: PARK, Chang Jung, 62392 Gwangju (KR); KIM, Soo Min, 62392 Gwangju (KR)
(74) Representative: BCKIP Part mbB

(57) **Abstract**

A protruding knurling unit includes: a first knurling portion extending at an incline with respect to a bottom surface; and a plurality of second knurling portions each extending at an incline with respect to the bottom surface. The first knurling portion includes a first knurling portion bottom. Each of the plurality of second knurling portions includes a second knurling portion bottom. A distance between the second knurling portion bottoms of the plurality of second knurling portions is shorter than a length of the first knurling portion bottom.

## Description

### TECHNICAL FIELD

The present disclosure relates to a protruding knurling unit and a tire including the same.

### BACKGROUND

Tires are mounted on various vehicles, from small vehicles to heavy equipment vehicles, and support the vehicle's load, and perform the functions of transmitting the vehicle's power to the ground, braking, and cushioning vibrations and shocks from the ground that occur while the vehicle is driving. Meanwhile, the sidewall of the tire is generally marked with tire information such as tire specifications, manufacturing date, and manufacturing plant, hatching patterns for functionality and aesthetics, and company and product logos in various ways.

Conventionally, in order to improve the visibility of the markings on the sidewall, the peripheral area is painted white or grooves such as fine indentations or projections are formed. However, simply painting the peripheral area white or forming grooves does not create a significant contrast in visibility compared to other parts of the tread, resulting in the issue of the markings not standing out.

In this regard, studies have been conducted on tires in which serrations are arranged with narrower spacing to improve visibility. However, simply reducing the spacing between serrations has a limitation in that it does not effectively reflect light from light sources such as sunlight.

### SUMMARY

In view of the above, the present disclosure provides a tire that effectively reflects or absorbs light from a light source and improves the visibility of characters.

In accordance with one aspect of the present disclosure, there is provided a protruding knurling unit including: a first knurling portion extending at an incline with respect to a bottom surface; and a plurality of second knurling portions each extending at an incline with respect to the bottom surface, wherein the first knurling portion includes a first knurling portion bottom, each of the plurality of second knurling portions includes a second knurling portion bottom, and a distance between the second knurling portion bottoms of the plurality of second knurling portions is shorter than a length of the first knurling portion bottom.

Further, the first knurling portion may be provided as a plurality of first knurling portions, a length of the second knurling portion bottom may be equal to a length of the first knurling portion bottom, each of the first knurling portions may further include a plurality of first knurling portion sides having equal lengths, and each of the second knurling portions may further include a plurality of second knurling portion sides having equal lengths.

Further, the protruding knurling unit may further include: a third knurling portion disposed between the first knurling portion and the second knurling portion and extending at an incline with respect to the bottom surface. The third knurling portion may include: a third knurling portion one side in contact with the first knurling portion side; and a third knurling portion other side in contact with the second knurling portion side, wherein an inclination angle of the third knurling portion one side with respect to the bottom surface may be smaller than an inclination angle of the third knurling portion other side with respect to the bottom surface.

Further, a height by which the first knurling portion protrudes from the bottom surface, a height by which the second knurling portion protrudes from the bottom surface, and a height by which the third knurling portion protrudes from the bottom surface may be equal.

In accordance with a second aspect of the present disclosure, there is provided a tire including: a plurality of protruding knurling units formed on a sidewall, wherein each of the protruding knurling units includes a first knurling portion, a second knurling portion, and a third knurling portion that protrude outwardly from an outer surface of the sidewall, wherein the first knurling portion includes a first knurling portion side and a first knurling portion bottom, wherein the second knurling portion includes a second knurling portion side and a second knurling portion bottom, wherein a length of the second knurling portion bottom is equal to a length of the first knurling portion bottom, wherein the third knurling portion includes: a third knurling portion one side in contact with the first knurling portion side; a third knurling portion other side in contact with the second knurling portion side; and a third knurling portion bottom, wherein the first knurling portion bottom and the second knurling portion bottom are in contact with each other, and wherein at least one of the plurality of protruding knurling units is disposed in a direction offset from another of the adjacent protruding knurling units.

Further, the tire may further include: an interposition region, wherein the plurality of protruding knurling units may include a plurality of first protruding knurling units arranged to extend in one direction and a plurality of second protruding knurling units arranged to extend in a direction different from the one direction, and the interposition region may be surrounded by the third knurling portions of the plurality of first protruding knurling units arranged adjacent to each other and the third knurling portions of the plurality of second protruding knurling units arranged adjacent to each other.

Further, the plurality of protruding knurling units may include a plurality of first protruding knurling units arranged to extend in one direction and a plurality of second protruding knurling units arranged to extend in a direction different from the one direction, the plurality of the first protruding knurling units and the plurality of the second protruding knurling units may be arranged alternately along the one direction, and the first protruding knurling unit and the second protruding knurling unit arranged adjacent to each other in the one direction may be disposed such that the first knurling portion bottom of the first protruding knurling unit and the second knurling portion bottom of the second protruding knurling unit are in contact with or face each other.

Further, the plurality of the first protruding knurling units and the plurality of the second protruding knurling units may be arranged alternately along another direction, and the first protruding knurling unit and the second protruding knurling unit arranged adjacent to each other in the another direction may be disposed such that the first knurling portion bottom of the second protruding knurling unit and the second knurling portion bottom of the first protruding knurling unit are in contact with or face each other.

According to embodiments of the present disclosure, the tire can effectively reflect or absorb light from the light source, thereby improving the visibility of the characters.

### BRIEF DESCRIPTION OF THE DRAWINGS

FIG. 1 is a tire in which a plurality of protruding knurling units and a plurality of interposition regions according to a first embodiment of the present disclosure are arranged inside characters.
FIG. 2 is a tire in which the plurality of protruding knurling units and the plurality of interposition regions according to the first embodiment of the present disclosure are arranged outside the characters.
FIG. 3 is a perspective view of the protruding knurling unit shown in FIG. 1.
FIG. 4 is a first knurling portion of FIG. 3.
FIG. 5 is a second knurling portion of FIG. 3.
FIG. 6 is a third knurling portion of FIG. 3.
FIG. 7 is a plan view of FIG. 3.
FIG. 8 is a perspective view of the plurality of protruding knurling units and the plurality of interposition regions according to the first embodiment of the present disclosure.
FIG. 9 is a plan view of FIG. 8.
FIG. 10 is a plan view of a protruding knurling unit according to a second embodiment of the present disclosure.
FIG. 11 is a perspective view of the plurality of protruding knurling units and a plurality of interposition regions according to the second embodiment of the present disclosure.
FIG. 12 is a third knurling portion of FIG. 10.
FIG. 13 is a plan view of FIG. 10.
FIGS. 14 and 15 are perspective views of protruding knurling units according to a third embodiment of the present disclosure.

In the drawings of the present specification, hatching may be a mark indicating a surface rather than a cross-section.

### DETAILED DESCRIPTION

Hereinafter, specific embodiments for implementing a spirit of the present disclosure will be described in detail with reference to the drawings.

In describing the present disclosure, detailed descriptions of known configurations or functions may be omitted to clarify the present disclosure.

When an element is referred to as being 'connected' to, 'supported' by, 'accessed' to, 'supplied' to, 'transferred' to, or 'contacted' with another element, it should be understood that the element may be directly connected to, supported by, accessed to, supplied to, transferred to, or contacted with another element, but that other elements may exist in the middle.

The terms used in the present disclosure are only used for describing specific embodiments, and are not intended to limit the present disclosure. Singular expressions include plural expressions unless the context clearly indicates otherwise.

Further, in the present disclosure, it is to be noted that expressions, such as the upper side, the lower side, the side surface are described based on the illustration of drawings, but may be modified if directions of corresponding objects are changed. For the same reasons, some components are exaggerated, omitted, or schematically illustrated in the accompanying drawings, and the size of each component does not fully reflect the actual size.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

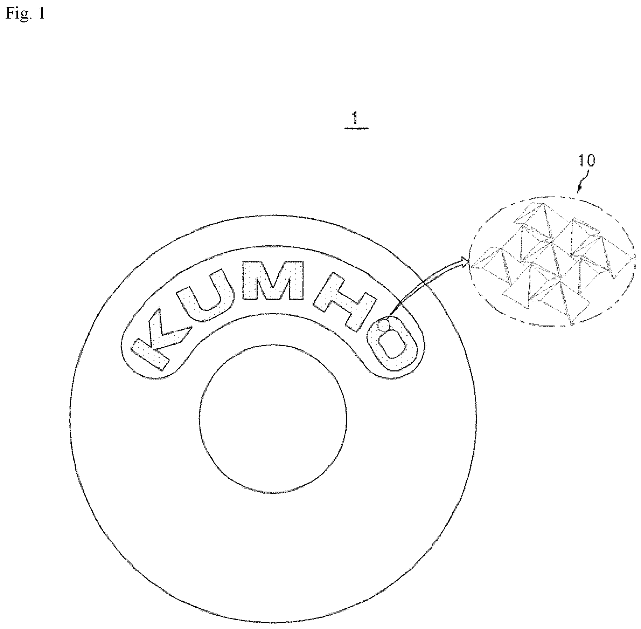

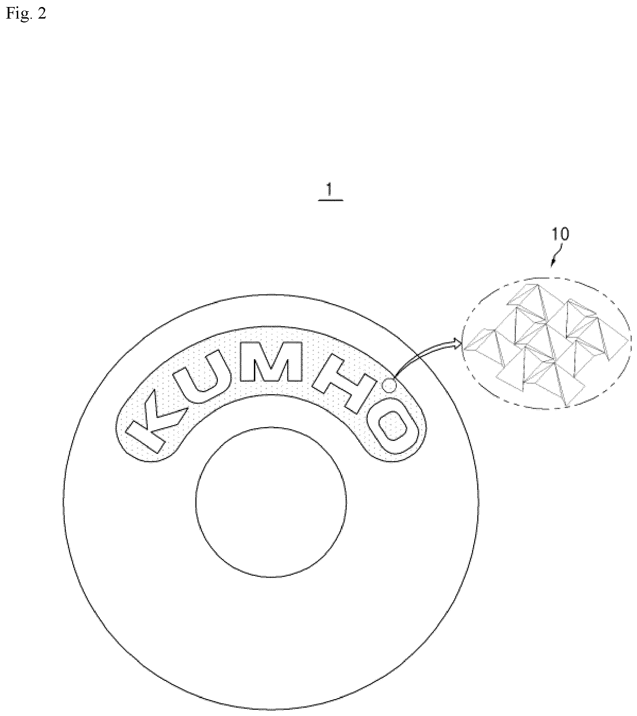

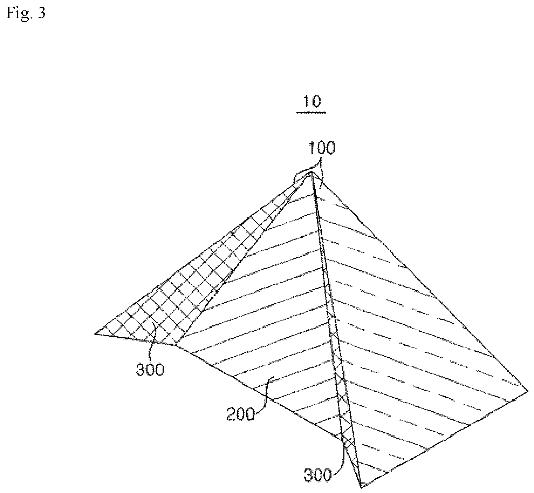

Hereinafter, a tire 1 according to one embodiment of the present disclosure will be described with reference to FIGS. 1 to 7. The tire 1 can be mounted on a rim (not shown) of a wheel and mounted on a vehicle. The tire 1 may include letters such as a brand name and a product name on its sidewall. The region of the tire 1 in which the letters are formed may include a protruding knurling unit 10 and an interposition region 20, so that visibility can be improved. The tire 1 may include the protruding knurling unit 10 and the interposition region 20.

The protruding knurling unit 10 may be a raised region for enhanced visibility. A plurality of protruding knurling units 10 may be provided. The arrangement relationship of the plurality of protruding knurling units 10 will be described later. The plurality of protruding knurling units 10 and a plurality of interposition regions 20 may be arranged either inside or outside the letters formed on the tire sidewall. The protruding knurling unit 10 may include a first knurling portion 100, a second knurling portion 200, and a third knurling portion 300.

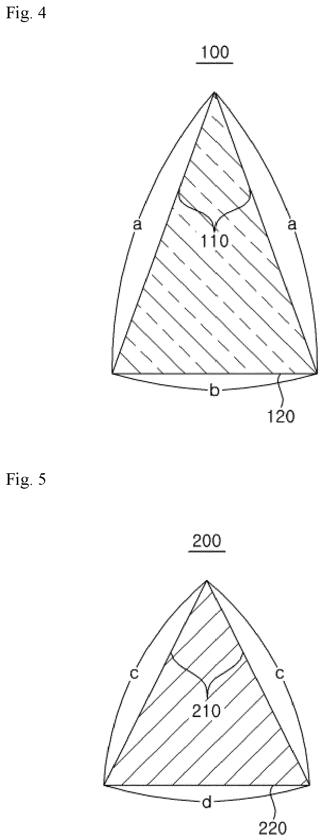

Referring again to FIG. 4, the first knurling portion 100 may extend at an incline with respect to a bottom surface (e.g., an outer surface of the sidewall). The first knurling portion 100 may have an isosceles triangle shape in which the side lengths are equal within a predetermined tolerance range. The first knurling portion 100 may be provided as a plurality of first knurling portions. The first knurling portion 100 may include a first knurling portion side 110 and a first knurling portion bottom 120.

The first knurling portion side 110 may be a side of the first knurling portion 100. A plurality of first knurling portion sides 110 may be provided. The lengths of the plurality of first knurling portion sides 110 may be equal within a predetermined tolerance range. The first knurling portion side 110 may be in contact with a third knurling portion one side 310.

The length of the first knurling portion side 110 may be referred to as a first knurling portion side length a. The first knurling portion side length a may be equal to a third knurling portion one-side length e, which will be described later, within a predetermined tolerance range. The first knurling portion side length a may be smaller than at least one of a first knurling portion bottom length b, a second knurling portion side length c, a second knurling portion bottom length d, a third knurling portion other-side length f, a third knurling portion bottom length g, and an interposition region side length h.

The first knurling portion bottom 120 may be a surface of the first knurling portion 100 that is in contact with the bottom surface. The first knurling portion bottom 120 may be in contact with the second knurling portion bottom 220. The first knurling portion bottom 120 may be equal to the length of the second knurling portion bottom 220 within a predetermined tolerance range.

The length of the first knurling portion bottom 120 may be referred to as a first knurling portion bottom length b. The first knurling portion bottom length b may be equal to the second knurling portion bottom length d, which will be described later, within a predetermined tolerance range. The first knurling portion bottom length b may be larger than at least one of the third knurling portion bottom length g and the interposition region side length h, which will be described later, and may be smaller than at least one of the first knurling portion side length a, the second knurling portion side length c, the third knurling portion one-side length e, and the third knurling portion other-side length f, which will be described later.

Referring again to FIG. 5, the second knurling portion 200 may extend at an incline with respect to the bottom surface. The second knurling portion 200 may have an isosceles triangle shape in which the side lengths are equal within a predetermined tolerance range.

The second knurling portion 200 may be provided as a plurality of second knurling portions. The second knurling portion 200 may include a second knurling portion side 210 and a second knurling portion bottom 220.

The second knurling portion side 210 may be a side of the second knurling portion 200. A plurality of second knurling portion sides 210 may be provided. The lengths of the plurality of second knurling portion sides 210 may be equal within a predetermined tolerance range.

The length of the second knurling portion side 210 may be referred to as the second knurling portion side length c. The second knurling portion side length c may be equal to the third knurling portion other-side length f within a predetermined tolerance range. The second knurling portion side length c may be greater than at least one of the third knurling portion bottom length g, the interposition region side length h to be described later, the first knurling portion bottom length b, and the second knurling portion bottom length d, and may be smaller than the first knurling portion side length a and the third knurling portion one-side length e.

The second knurling portion bottom 220 may be a surface of the second knurling portion 200 that is in contact with the bottom surface. The length of the second knurling portion bottom 220 may be equal to the length of the first knurling portion bottom 120 within a predetermined tolerance range. The second knurling portion bottom 220 may be in contact with the first knurling portion bottom 120.

The length of the second knurling portion bottom 220 may be referred to as the second knurling portion bottom length d. The second knurling portion bottom length d may be equal to the first knurling portion bottom length b within a predetermined tolerance range. The second knurling portion bottom length d may be smaller than at least one of the interposition region side length h and the third knurling portion bottom length g, and may be smaller than at least one of the second knurling portion side length c, the third knurling portion other-side length f, the first knurling portion side length a, and the third knurling portion one-side length e, which will be described later.

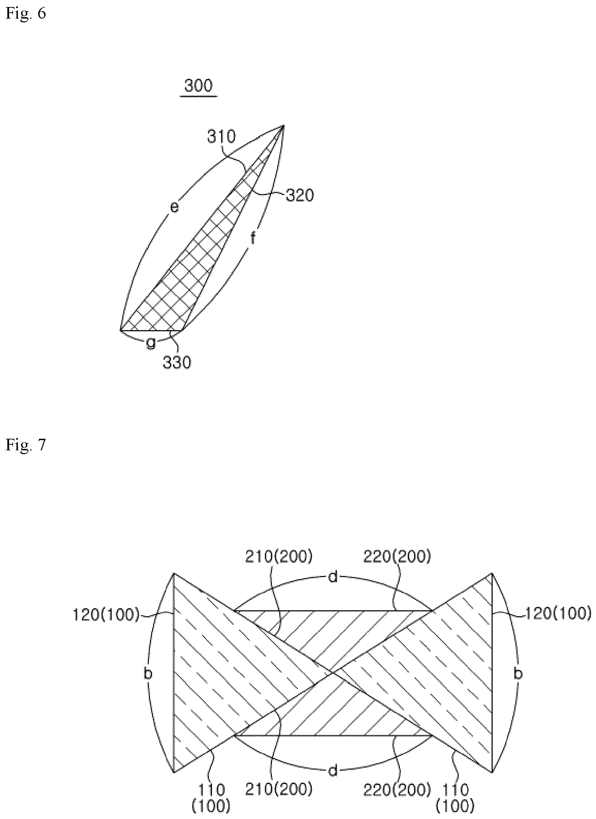

Referring again to FIG. 6, the third knurling portion 300 may extend at an incline with respect to the bottom surface. The third knurling portion 300 may be positioned between the first knurling portion 100 and the second knurling portion 200. The third knurling portion 300 may include a third knurling portion one side 310, a third knurling portion other side 320, and a third knurling portion bottom 330.

The third knurling portion one side 310 may be in contact with the first knurling portion side 110. The inclination angle of the third knurling portion one side 310 with respect to the bottom surface may be smaller than the inclination angle of the third knurling portion other side 320 with respect to the bottom surface.

The length of the third knurling portion one side 310 may be referred to as the third knurling portion one-side length e. The third knurling portion one-side length e may be equal to the first knurling portion side length a within a predetermined tolerance range. The third knurling portion one-side length e may be greater than the first knurling portion bottom length b, the second knurling portion side length c, the second knurling portion bottom length d, the third knurling portion other-side length f, the third knurling portion bottom length g, and the interposition region side length h.

The third knurling portion other side 320 may be in contact with the second knurling portion side 210. The inclination angle of the third knurling portion other side 320 with respect to the bottom surface may be greater than the inclination angle of the third knurling portion one side 310 with respect to the bottom surface.

The length of the third knurling portion other side 320 may be referred to as the third knurling portion other-side length f. The third knurling portion other-side length f may be equal to the second knurling portion side length c within a predetermined tolerance range. The third knurling portion other-side length f may be larger than at least one of the interposition region side length h, the third knurling portion bottom length g, the first knurling portion bottom length b, and the second knurling portion bottom length d, and may be smaller than the first knurling portion side length a and the third knurling portion one-side length e.

The third knurling portion bottom 330 may be a surface of the third knurling portion 300 that is in contact with the bottom surface. The length of the third knurling portion bottom 330 may be equal to the length of an interposition region side 410, which will be described later, within a predetermined tolerance range. The third knurling portion bottom 330 may be in contact with the interposition region 20.

The length of the third knurling portion bottom 330 may be referred to as the third knurling portion bottom length g. The third knurling portion bottom length g may be equal to the interposition region side length h within a predetermined tolerance range. The third knurling portion bottom length g may be smaller than at least one of the first knurling portion side length a, the first knurling portion bottom length b, the second knurling portion side length c, the second knurling portion bottom length d, the third knurling portion one-side length e, and the third knurling portion other-side length f.

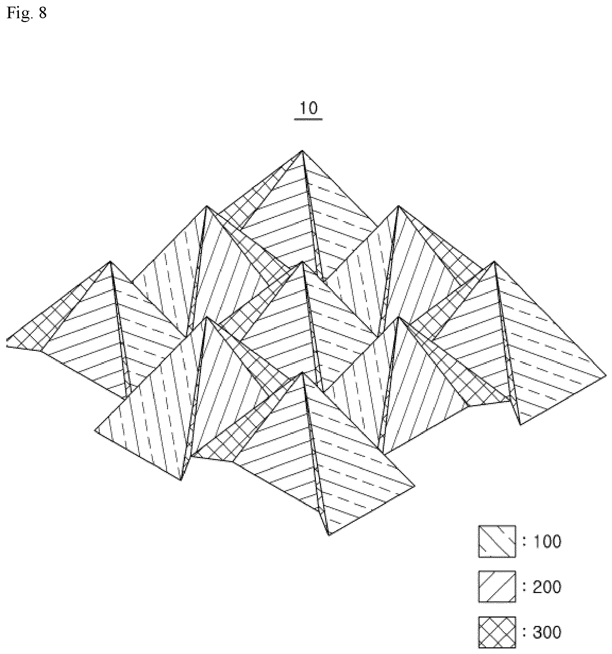

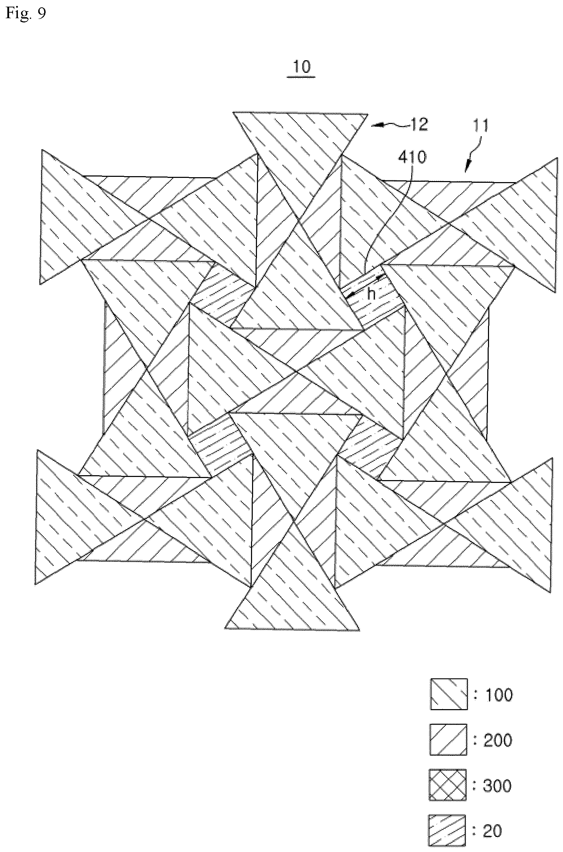

Hereinafter, the arrangement of the protruding knurling unit 10 having the configuration described above will be described with reference to FIGS. 8 and 9.

In any one of the plurality of protruding knurling units 10, the height by which the first knurling portion 100 protrudes from the bottom surface, the height by which the second knurling portion 200 protrudes from the bottom surface, and the height by which the third knurling portion 300 protrudes from the bottom surface may be equal within a predetermined tolerance range.

A plurality of first knurling portions 100 may be arranged opposite each other. The vertex formed by contact between the first knurling portion sides 110 of one of the plurality of first knurling portions 100 may be in contact with the vertex formed by contact between the first knurling portion sides 110 of another one of the plurality of first knurling portions 100. The first knurling portion bottom 120 of one of the plurality of first knurling portions 100 and the first knurling portion bottom 120 of another one of the plurality of first knurling portions 100 may be arranged in parallel.

A plurality of second knurling portions 200 may be arranged opposite each other. The vertex formed by contact between the second knurling portion sides 210 of one of the plurality of second knurling portions 200 may be in contact with the vertex formed by contact between the second knurling portion sides 210 of another one of the plurality of second knurling portions 200. The vertex formed by contact between the second knurling portion sides 210 of one of the plurality of second knurling portions 200 may be in contact with the vertex formed by contact between the first knurling portion sides 110 of one of the plurality of first knurling portions 100. In other words, the vertex formed by the first knurling portion sides 110 of one of the plurality of first knurling portions 100, the vertex formed by the first knurling portion sides 110 of another one of the plurality of first knurling portions 100, the vertex formed by the second knurling portion sides 210 of one of the plurality of second knurling portions 200, and the vertex formed by the second knurling portion sides 210 of another one of the plurality of second knurling portions 200 may be in contact with one another. The second knurling portion bottom 220 of one of the plurality of second knurling portions 200 and the second knurling portion bottom 220 of another one of the plurality of second knurling portions 200 may be arranged in parallel. The distance between the second knurling portion bottoms 220 of the second knurling portions 200 may be shorter than the length of the first knurling portion bottom 120.

The vertex formed by contact between the first knurling portion sides 110 of one of the plurality of first knurling portions 100, the vertex formed by contact between the first knurling portion sides 110 of another one of the plurality of first knurling portions 100, the vertex formed by contact between the second knurling portion sides 210 of one of the plurality of second knurling portions 200, the vertex formed by contact between the second knurling portion sides 210 of another one of the plurality of second knurling portions 200, the vertex formed by contact between the plurality of third knurling portion one sides 310, and the vertex formed by contact between the plurality of third knurling portion other sides 320 may be in contact with one another. Hereinafter, the arrangement of the protruding knurling unit 10 having the aforementioned configuration, when viewed from above, will be described.

When viewed from above, the third knurling portion 300 may not be visible. The plurality of first knurling portions 100 may be arranged opposite each other, and the plurality of second knurling portions 200 may be arranged opposite each other. One of the plurality of second knurling portions 200 may be disposed between the plurality of first knurling portions 100, and one of the plurality of first knurling portions 100 may be disposed between the plurality of second knurling portions 200.

When viewed from above, the end of the second knurling portion side 210 may come into contact with the first knurling portion side 110 at a central portion or at a position further inward from the central portion of the first knurling portion side 110.

The interposition region 20 may be disposed between a plurality of protruding knurling units 10. The interposition region 20 may have a non-protruding shape and may be in contact with the bottom surface. The interposition region 20 may be in contact with the third knurling portion 300. A plurality of interposition regions 20 may be provided. The interposition region 20 may include an interposition region side 410.

The interposition region side 410 of may be in contact with the third knurling portion bottom 330. A plurality of interposition region sides 410 may be provided. The lengths of the plurality of interposition region sides 410 may be equal within a predetermined tolerance range. The length of the interposition region side 410 may be equal to the length of the third knurling portion bottom 330 within a predetermined tolerance range. The interposition region side 410 may be in contact with the third knurling portion bottom 330.

The length of the interposition region side 410 may be referred to as the interposition region side length h. The interposition region side length h may be equal to the third knurling portion bottom length g within a predetermined tolerance range. The interposition region side length h may be smaller than at least one of the first knurling portion side length a, the first knurling portion bottom length b, the second knurling portion side length c, the second knurling portion bottom length d, the third knurling portion one-side length e, and the third knurling portion other-side length f.

The third knurling portion bottom length g and the interposition region side length h may be equal within a predetermined tolerance range, and the first knurling portion bottom length b and the second knurling portion bottom length d may be equal within a predetermined tolerance range. The second knurling portion side length c and the third knurling portion other-side length f may be equal within a predetermined tolerance range, and the first knurling portion side length a and the third knurling portion one-side length e may be equal within a predetermined tolerance range. At least one of the third knurling portion bottom length g and the interposition region side length h may be smaller than at least one of the first knurling portion bottom length b and the second knurling portion bottom length d. At least one of the first knurling portion bottom length b and the second knurling portion bottom length d may be smaller than at least one of the second knurling portion side length c and the third knurling portion other-side length f. At least one of the second knurling portion side length c and the third knurling portion other-side length f may be smaller than the first knurling portion side length a and the third knurling portion one-side length e.

The protruding knurling unit 10 may include a first protruding knurling unit 11 arranged to extend in one direction and a second protruding knurling unit 12 arranged to extend in a direction different from one direction. A plurality of first protruding knurling units 11 and a plurality of second protruding knurling units 12 may be provided. The interposition region 20 may be surrounded by the third knurling portions 300 of the plurality of first protruding knurling units 11 that are arranged adjacent to each other and the third knurling portions 300 of the plurality of second protruding knurling units 12 that are arranged adjacent to each other.

The plurality of first protruding knurling units 11 and the plurality of second protruding knurling units 12 may be arranged alternately along one direction. The first protruding knurling unit 11 and the second protruding knurling unit 12 arranged adjacent to each other in one direction may be disposed such that the first knurling portion bottom 120 of the first protruding knurling unit 11 and the second knurling portion bottom 220 of the second protruding knurling unit 12 are in contact with or face each other.

The plurality of first protruding knurling units 11 and the plurality of second protruding knurling units 12 may be arranged alternately along another direction. The first protruding knurling unit 11 and the second protruding knurling unit 12 arranged adjacent to each other in the another direction may be disposed such that the first knurling portion bottom 120 of the second protruding knurling unit 12 and the second knurling portion bottom 220 of the first protruding knurling unit 11 are in contact with or face each other.

Hereinafter, the arrangement of the protruding knurling unit 10 and the interposition region 20 having the configuration described above will be described.

Any one of the plurality of protruding knurling units 10 may be disposed in an orientation different from that of another adjacent protruding knurling unit 10. For example, any one of the plurality of protruding knurling units 10 may be disposed in an orientation perpendicular to that of another adjacent protruding knurling unit 10. The first knurling portion bottom 120 of the first knurling portion 100 disposed on one side of any one of the plurality of protruding knurling units 10 may be in contact with the second knurling portion bottom 220 of the second knurling portion 200 disposed on the other side of another adjacent protruding knurling unit 10. The second knurling portion bottom 220 of the second knurling portion 200 disposed on one side of the another protruding knurling unit 10 may be in contact with the first knurling portion bottom 120 of the first knurling portion 100 of yet another adjacent protruding knurling unit 10 arranged on one side of the another protruding knurling unit 10.

The arrangement relationship among one of the plurality of protruding knurling units 10, another one of the plurality of protruding knurling units 10 adjacent to the one of the plurality of protruding knurling units 10, and yet another one of the plurality of protruding knurling units 10 adjacent to the another one of the plurality of protruding knurling units 10 may be the same as the arrangement relationship of the plurality of protruding knurling units 10 that are arranged in a direction different from the direction defined by the one side and the other side.

Hereinafter, the effects of the tire 1 having the configuration described above will be described.

The tire 1 can effectively reflect or absorb light from a light source. When the tire 1 effectively reflects or absorbs light from a light source, the readability of printed characters can be improved. The first knurling portion 100, the second knurling portion 200, and the third knurling portion 300 are repeatedly arranged, so that light from a light source can be effectively reflected or absorbed even with a simple structure.

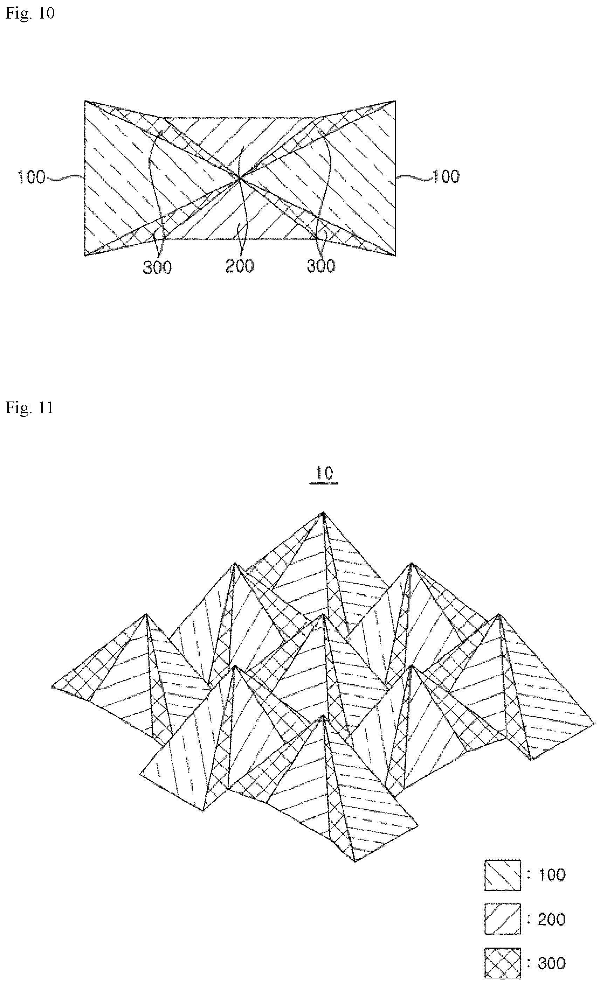

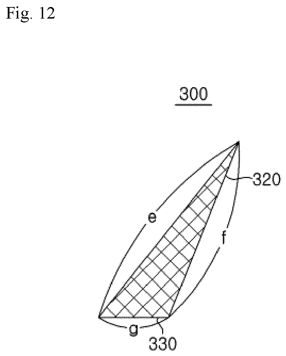

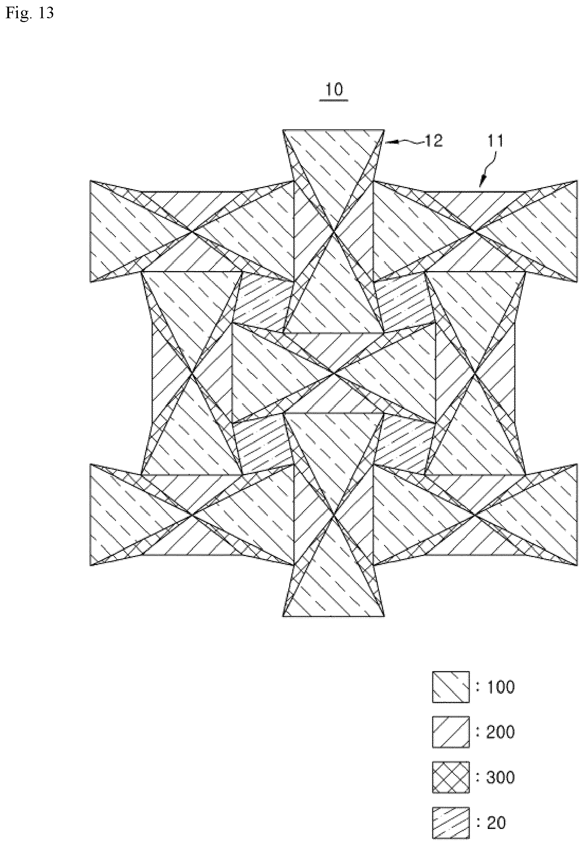

Meanwhile, in addition to the configuration described above, a tire 1 according to a second embodiment of the present disclosure may also be provided. Hereinafter, the second embodiment of the present disclosure will be described with reference to FIGS. 10 to 13. In describing the second embodiment, the description will be focused on the differences compared to the above-described embodiment, and the same descriptions will refer to the above-described embodiment.

Referring to FIGS. 10 to 13, when viewed from above, an end of the second knurling portion side 210 may come into contact with the first knurling portion side 110 at a position that is farther outward than the center of the first knurling portion side 110. When viewed from above, in the protruding knurling unit 10, the area of the third knurling portion 300 may be smaller than the area of the first knurling portion 100 and larger than the area of the second knurling portion 200.

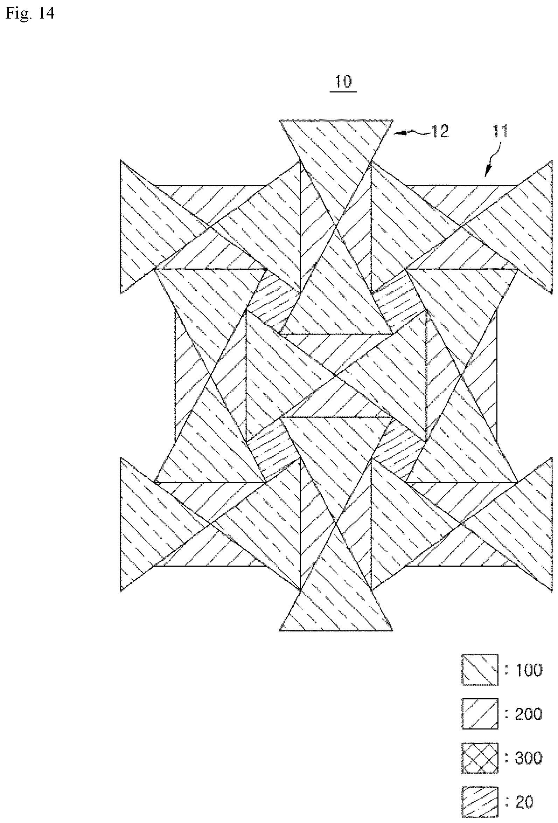

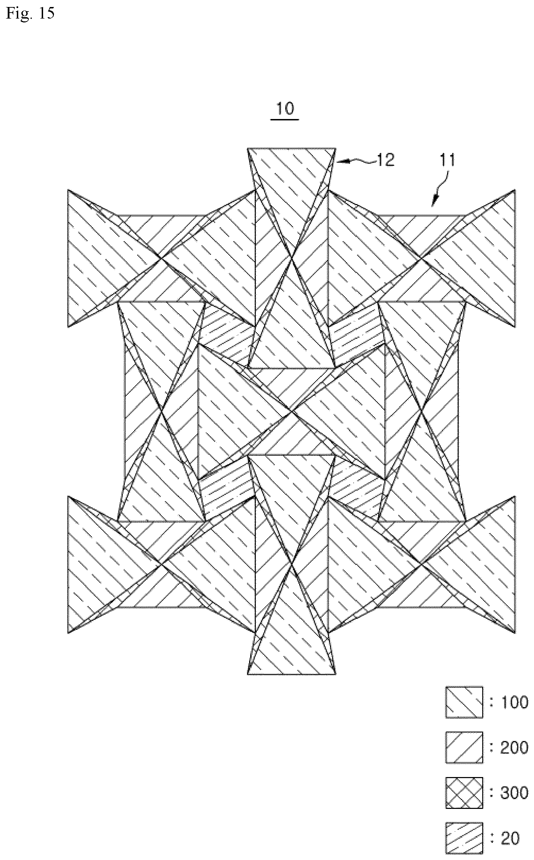

Meanwhile, in addition to the configurations described above, a tire 1 according to a third embodiment of the present disclosure may also be provided. Hereinafter, the third embodiment of the present disclosure will be described with reference to FIGS. 14 and 15. In describing the third embodiment, the description will be focused on the differences compared to the above-described embodiments, and the same description will refer to the above-described embodiments.

Referring to FIGS. 14 and 15, the first knurling portion bottom length b of the first protruding knurling unit 11 and the first knurling portion bottom length b of the second protruding knurling unit 12 may be different. The second knurling portion bottom length d of the first protruding knurling unit 11 and the second knurling portion bottom length d of the second protruding knurling unit 12 may be different. The first knurling portion bottom 120 of the first protruding knurling unit 11 may be in contact with the second knurling portion bottom 220 of the second protruding knurling unit 12. The first knurling portion bottom 120 of the second protruding knurling unit 12 may be in contact with the second knurling portion bottom 220 of the first protruding knurling unit 11. For example, the first knurling portion bottom length b of the first protruding knurling unit 11 may be greater than the first knurling portion bottom length b of the second protruding knurling unit 12. The second knurling portion bottom length d of the first protruding knurling unit 11 may be smaller than the second knurling portion bottom length d of the second protruding knurling unit 12.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. A protruding knurling unit comprising:
a first knurling portion extending at an incline with respect to a bottom surface; and
a plurality of second knurling portions each extending at an incline with respect to the bottom surface,
wherein the first knurling portion includes a first knurling portion bottom,
each of the plurality of second knurling portions includes a second knurling portion bottom, and
a distance between the second knurling portion bottoms of the plurality of second knurling portions is shorter than a length of the first knurling portion bottom.

2. The protruding knurling unit of claim 1, wherein the first knurling portion is provided as a plurality of first knurling portions,
a length of the second knurling portion bottom is equal to a length of the first knurling portion bottom,
each of the first knurling portions further includes a plurality of first knurling portion sides having equal lengths, and
each of the second knurling portions further includes a plurality of second knurling portion sides having equal lengths.

3. The protruding knurling unit of claim 2, further comprising:
a third knurling portion disposed between the first knurling portion and the second knurling portion and extending at an incline with respect to the bottom surface,
wherein the third knurling portion includes:
a third knurling portion one side in contact with the first knurling portion side; and
a third knurling portion other side in contact with the second knurling portion side, and
wherein an inclination angle of the third knurling portion one side with respect to the bottom surface is smaller than an inclination angle of the third knurling portion other side with respect to the bottom surface.

4. The protruding knurling unit of claim 3, wherein a height by which the first knurling portion protrudes from the bottom surface, a height by which the second knurling portion protrudes from the bottom surface, and a height by which the third knurling portion protrudes from the bottom surface are equal.

5. A tire comprising:
a plurality of protruding knurling units formed on a sidewall,
wherein each of the protruding knurling units includes a first knurling portion, a second knurling portion, and a third knurling portion that protrude outwardly from an outer surface of the sidewall,
wherein the first knurling portion includes a first knurling portion side and a first knurling portion bottom,
wherein the second knurling portion includes a second knurling portion side and a second knurling portion bottom,
wherein a length of the second knurling portion bottom is equal to a length of the first knurling portion bottom,
wherein the third knurling portion includes:
a third knurling portion one side in contact with the first knurling portion side;
a third knurling portion other side in contact with the second knurling portion side; and
a third knurling portion bottom,
wherein the first knurling portion bottom and the second knurling portion bottom are in contact with each other, and
wherein at least one of the plurality of protruding knurling units is disposed in a direction offset from another of the adjacent protruding knurling units.

6. The tire of claim 5, further comprising:
an interposition region,
wherein the plurality of protruding knurling units include a plurality of first protruding knurling units arranged to extend in one direction and a plurality of second protruding knurling units arranged to extend in a direction different from the one direction, and
the interposition region is surrounded by the third knurling portions of the plurality of first protruding knurling units arranged adjacent to each other and the third knurling portions of the plurality of second protruding knurling units arranged adjacent to each other.

7. The tire of claim 5, wherein the plurality of protruding knurling units include a plurality of first protruding knurling units arranged to extend in one direction and a plurality of second protruding knurling units arranged to extend in a direction different from the one direction,
the plurality of the first protruding knurling units and the plurality of the second protruding knurling units are arranged alternately along the one direction, and
the first protruding knurling unit and the second protruding knurling unit arranged adjacent to each other in the one direction are disposed such that the first knurling portion bottom of the first protruding knurling unit and the second knurling portion bottom of the second protruding knurling unit are in contact with or face each other.

8. The tire of claim 7, wherein the plurality of the first protruding knurling units and the plurality of the second protruding knurling units are arranged alternately along another direction, and
the first protruding knurling unit and the second protruding knurling unit arranged adjacent to each other in the another direction are disposed such that the first knurling portion bottom of the second protruding knurling unit and the second knurling portion bottom of the first protruding knurling unit are in contact with or face each other.
